# EUROPÄISCHE PATENTANMELDUNG

(11) **EP 1 285 583 A1**
(43) Veröffentlichungstag der Anmeldung: **26.02.2003**
(21) Anmeldenummer: 02018057.6
(22) Anmeldetag: 13.08.2002
(51) Int. Cl.: A23C 19/06, A23C 19/097, A23C 19/09

(54) **Verfahren zum Herstellen eines Käseproduktes zum Grillen oder Rösten sowie Produkt, hergestellt mit diesem Verfahren**

(30) Priorität: 22.08.2001 DE 10140163
(71) Anmelder: Ceposa AG, 8280 Kreuzlingen (CH)
(72) Erfinder: Gerber, Beat, 8572 Grattshausen (CH); Schreiber, Markus, 8273 Triboltingen (CH)
(74) Vertreter: Muri, Peter

(57) **Zusammenfassung**

Die Erfindung bezieht sich auf ein Herstellungsverfahren eines Käses, der insbesondere grillierbar und frittierbar ist.

Die Erfindung stellt ein Käseherstellungsverfahren vor, das die Möglichkeit gibt, einen Käse herzustellen, der unter Wärmeeinwirkung, insbesondere Feuer, Heizwendel, Mikrowelle oder Friteuse nicht in den Schmelzprozess übergeht. Dies wird dadurch erreicht, dass nach Herstellung des Rohkäses dieser in Fladen geschnitten wird und in eine heißes Flüssigkeit eingebracht wird, und zwar so lange, bis die Fladen auf der Flüssigkeit schwimmen. Vorzugsweise ist die Flüssigkeit Molke, die aus dem Käseherstellungsprozess gewonnen wird.

Bei der Flüssigkeit kann es sich auch um heißen Dampf oder eine sonstige Art von Flüssigkeit handeln, die möglicherweise dem Käse einen zusätzlichen Geschmack verleiht.

## Beschreibung

Die Erfindung bezieht sich auf ein Herstellungsverfahren eines Käses, der insbesondere grillierbar und frittierbar ist.

### Stand der Technik

Nach der Deutschen Käseverordnung sind Käse frische oder in verschiedenen Graden der Reife befindliche Erzeugnisse, die aus dick gelegter Käsereimilch hergestellt werden.

Bei der Käsereimilch kann es sich um weitgehend unbehandelte Rohmilch, um pasteurisierte Milch oder um aus Milchpulver gewonnene Milch handeln.
Zur Bereitung der Käsereimilch wird die Rohmilch von Kuh, Schaf Ziege oder einem anderen Tier gefiltert, gereinigt und sodann der Fettgehalt eingestellt. Dies kann in einem Separator geschehen, es kann auch durch Zugabe von Sahne der Fettgehalt erhöht werden. Zum Pasteurisieren wird die Milch vorzugsweise auf eine Temperatur zwischen 70°C und 73°C Grad gebracht, notwendig ist ein Bereich zwischen 65°C Grad und 84°C Grad.
Wird die Käsereimilch aus Milchpulver gewonnen, muss der entsprechende Feststoff nur noch mit Flüssigkeit versetzt werden.

Die Käseherstellung beruht immer auf dem Vorgang des Gerinnens der Milch, d.h. die dicke Käsemasse trennt sich von der dünnflüssigen Molke. Dazu wird der Käsereimilch ein Gerinnungsmittel zugesetzt, nämlich Lab oder Säure oder Lab und Säure. Auch andere Gerinnungsmittel, wie andere Enzyme, die auf die Eiweiße wirken, sind denkbar.

Mit der reinen Säuregerinnung wird Frischkäse, Joghurt und Sauermilch hergestellt. Eine reine Labgerinnung führt zu preiswertem Käse. In der Regel wird der Käsereimilch Lab und Säuerungsmittel in unterschiedlichen Zusammensetzungen zugesetzt. Das Säuerungsmittel kann dabei als Säurewecker, beispielsweise Mischkulturen aus Sc. lactis, Sc. cremoris, Sc. diacetilactis und Lc. citrovorum oder Sc. durans oder als Schnellsäurekulturen, wie beispielsweise Sc. thermophilus, Lb. bulgaricus oder Sc. Durans, zugegeben werden. Diese setzen den in der Milch enthaltenen Zucker in einem ersten Reifeprozess in Säure um. Altemativ erfolgt die Säuerung direkt mit Säure, was zu einer schnellen pH-Wert Absenkung und damit zu einer schnellen Gerinnung führt.

Das Lab, auch Chyomesin genannt, ist ein eiweissspaltendes Enzym, das an sich in Kälbermagen zu finden ist. Es ist von Natur aus bestimmt, die aufgenommene Muttermilch zum Gerinnen zu bringen und damit für die Jungtiere leichter verdaulich zu machen. Ursprünglich wurde das zur Käseherstellung benötigte Lab nur aus Mägen geschlachteter Kälber gewonnen, ist aber heute auch aus ökonomischen Gründen nicht mehr ausreichend verfügbar. Daher werden auch sogenannte Labaustauschstoffe, das mikrobielle Lab benutzt. Hierbei handelt es sich um chemisch aufbereitete Pflanzen- und Bakterienenzyme. Hierbei unterscheidet man zwischen einem sogenannten Flüssiglab, welches eine längere Haltbarkeit hat und einem Pulverlab, welches auch in Tablettenform vorhanden ist.

Das Lab wird je nach Handelsform als Flüssigkeit, Feststoff oder Pulver dosiert. Dabei kommt es auf die Labstärke an, die angibt, wie viele Teile Milch von einem Teil Lab bei 35°C in 40 Minuten dick gelegt wird. Bei Flüssiglab liegt die Labstärke z.B. zwischen 1 : 10 000 und 1 : 15 000. D.h., dass 1 g Lab 10 000 bis 15 000 g Milch bei den angegebenen Temperaturen und Zeiten dick legt.
Die Labwirkung unterteilt sich in zwei Phasen, nämlich in eine Primärphase oder eine enzymatische Phase und in ein Sekundär- oder Koagulationsphase. In der ersten Phase spaltet das Labenzym, dessen optimale Aktivität bei einer Temperatur von 35°C liegt, lediglich die Bindung zwischen zwei bestimmten Amminosäuren (Phenylalanin und Methionin) des Kappa-Caseins. Der hydrophyle Teil des Kappa-Caseins genannt Glycomakroprotein ist in dieser Primärphase abgetrennt und geht nun in die wässrige Phase (Molke) über. Zurück bleibt das sogenannte Para-Kappa-Casein. Durch diese Spaltung wird bewirkt, dass die Milch koaguliert. Dies geschieht in der Regel schon in den ersten Minuten der Labzugabe. Dabei gerinnt die Käsereimilch und dabei entsteht das sogenannte Labgel oder auch Gallerte. Das Dickwerden der Milch kann bis zu einer Stunde dauern, bis die Gallerte sich soweit verfestigt hat, dass diese schnittreif ist.

Zusätzlich zu den Gerinnungsmittel können der Milch noch Aromen zugefügt werden, die Einfluss auf den späteren Geschmack des fertigen Käses haben.

Die Zusätze werden in die Käsereimilch gerührt. Es muss nun so lange gewartet werden, bis sich die Eiweißketten verschränkt haben. Die Wartezeit ist abhängig davon, wie hoch die Labstärke ist, weit sich der pH-Wert abgesenkt hat und wie viel die Umgebungstemperatur misst. Die Eiweißketten bilden ein Netz, in dem sich das Wasser sammelt.

Die Wirksamkeit des Labs nimmt bei fallendem pH-Wert der Käsereimilch zu. Damit findet eine schnellere Gallertbildung und darauf folgende Schrumpfung des Gelgerüsts statt. Die sogenannte Vorreifung der Milch durch Milchsäurebakterienzusatz beeinflusst also entscheidend die Beschaffenheit der Gallerte, der Bruchkörner und der Festigkeit des entstehenden Käses.

Durch Zerkleinern, Schneiden oder ähnlichem entstehen Bruchwürfel und das Wasser kann herauslaufen. Fett, Eiweiß und ein Teil des Zuckers hingegen bleiben im Käsebruch. Die Größe der Bruchwürfel hat Einfluss auf die spätere Härte des Käses. Je kleiner die Bruchstücke sind, desto besser kann das Wasser entweichen und desto härter wird der Käse. Für einen Hartkäse beispielsweise werden die Würfel auf Reiskorngröße gebracht, für einen halbharten Käse auf Kirschkerngröße. Hält man die gesamte Masse in Bewegung, kann das Wasser umso besser entweichen. Die Temperatur und die Zeitdauer, unter denen man die Masse dem Trocknungsprozess aussetzt, sind weitere Parameter für die Härte und die Gleichmäßigkeit der Struktur des Käses.

Durch ein kurzes Absitzenlassen entstehen eine deutliche Bruchmasse sowie die Molke.

Durch weiteres Umschichten und Rühren kann der bis dahin entstandene Bruch verfestigt werden. Durch einen weiteren Wärmeaustausch, der in der Regel bei 43 bis 44 °C liegt, wird der Bruch noch einmal nachgewärmt und weitere Molke tritt aus. Entfernt man die Molke aus der Masse, so wird Zucker entzogen, der Nährstoff für die Reifungsbakterien bietet. Durch Wasserzugabe und Molkeabfuhr kann daher zu diesem Zeitpunkt auch noch der Säuerungsprozess, die Bakterienanzahl und die Reifungsgeschwindigkeit gesteuert werden.

Nach dem Abtropfen der Molke kann der Bruch geformt werden. Dazu werden in einem nächsten Verfahrensschritt der Bruchkörper und die Molke getrennt, indem die Masse in Presswannen, d.h. perforierten Formenbehältern gepresst wird. Die Zeit und der Druck werden so gewählt, dass das Wasser gleichmäßig austreten kann.

Das Ergebnis dieses Vorgangs ist der sogenannte Rohkäse.

Eine Verfestigung der Käsemasse und eine geschlossene Oberflächenstruktur wird durch das Salzen des Käses in einer Salzlake (Kochsalz gelöst in Wasser) unterstützt. Kochsalz ist hydroskopisch, d.h. es ist stark wasserbindend. So entzieht es der Oberfläche die letzte Flüssigkeit und trägt damit wesentlich zur Haut und Rindenbildung des Käses bei. Ein gewisser Feuchtigkeitsgrad im Käse bleibt dabei erhalten, was auch später für die Reifung des Käses wesentlich ist.
Unmittelbar nach dem Formen und Salzen des Labkäses sind sein Flavor und seine Konsistenz noch wenig ausgeprägt. Der Teig ist überwiegend bröckelig und der Geschmack mehr oder weniger säuerlich. Mikroorganismen und weitere Enzyme, die genauer aufeinander abgestimmt sind und die bereits schon in der Käsereimilch eingegeben worden
sind, übernehmen nun die Aufgabe der Reifung. Während des Reifungsprozesses laufen mehrere Abbaureaktionen durch Enzyme nebeneinander ab. Diese sind natürlich von Luftfeuchtigkeit und vor allem von der Temperatur im Lagerraum abhängig.

Je nach dem, welche Käseart erreicht werden soll, beispielsweise Weichkäse, halbfester Schnittkäse, Schnittkäse oder Hartkäse, dauern die Reifezeiten von einigen Tagen bis zu mehreren Monaten.

Zur Herstellung eines Schmelzkäses aus dem Stand der Technik bekannten Frischkäse sind mehrere Verfahren bekannt.

So ist z.B. aus der DE 41 04 686 ein Verfahren an einer Vorrichtung zur Herstellung von Schmelzkäse bekannt, das darin besteht, dass die Käsemasse, die beispielsweise in kleine Teile zerschnitten ist, mit weiteren Rezepturbestandteilen vermischt wird und auf maximal 140°C aufgeheizt wird. Eine einströmende Dampfmenge wird so bemessen, dass entsprechend der durch die Mischzone strömenden Käsemasse für das Kondensat seine Energie zumindest näherungsweise vollständig an die Käsemasse abgibt. In der Mischzone wird die Käsemasse durch hochtourig umlaufende Werkzeuge in hohe Turbulenzen versetzt. Der Mischzone ist eine Emulgierzone nachgeschaltet, in der die aus der Mischzone austretende Käsemasse durch hochtourig umlaufende Werkzeuge emulgiert und partiell gemischt wird. Die Kühlung der Schmelzkäsemasse erfolgt unter Vakuum in einer Entspannungs- bzw. Cremierzone, in der die Schmelzkäsemasse durch langsam umlaufende Werkzeuge cremiert wird. Insbesondere wird durch die hohe Temperatur erreicht, dass das Eiweiss des Käses denaturiert und dieses nicht mehr in einer verbindungsfähigen Form vorliegt. Es ist nicht mehr ausreichend stabil, so dass keine Viskosität mehr aufgebaut werden kann. Dadurch bleibt auch nach ihrer Abkühlung unter 100 °C die Käsemasse in einem flüssigen Zustand.

Aus DE 691 18 286 ist für die Mozzarellaherstellung bekannt, dass der Käsebruch in einem geneigten Doppelschnecken-Förderkocher für eine Zeitdauer von 0,5 bis 2 Minuten bei einer Temperatur von 55°C bis 71°C Grad unter heißem Wasser bearbeitet wird.

### Nachteile des Stands der Technik

Die im Stand der Technik bekannten Verfahren zur Herstellung von Käse, Schmelzkäse oder ähnlichen Käsesorten, führen alle die Nachteile, dass der Käse, sobald er hergestellt und gereift ist und dieser einer entsprechenden Wärme, beispielsweise einem Feuer, einer Mikrowellenerhitzung oder ähnlichen Temperaturen ausgesetzt wird, in die Schmelzphase übertritt. In den meisten Fällen wird der Käse dadurch so flüssig, dass er ohne einen essbaren Träger nicht weiterverwendet werden kann oder gegossen werden muss. Bekannte Verfahren zur Weiterverarbeitung von Rohkäse benötigen den Zusatz von weiteren Rezepturbestandteilen oder den Einsatz von aufwendigen Maschinen.

### Aufgabe der Erfindung

Die Aufgabe der Erfindung besteht darin, ein Käseherstellungsverfahren zu schaffen, das die Möglichkeit gibt, einen Käse herzustellen, der unter Wärmeeinwirkung, insbesondere Feuer, Heizwendel, Mikrowelle oder Friteuse nicht in den Schmelzprozess übergeht.

### Lösung der Aufgabe

Die Lösung der Aufgabe wird dadurch erreicht, dass nach Herstellung des Rohkäses dieser in Fladen geschnitten wird und in eine heiße Flüssigkeit eingebracht wird, und zwar so lange, bis die Fladen auf der Flüssigkeit schwimmen. Vorzugsweise ist die Flüssigkeit Molke, die aus dem Käseherstellungsprozess gewonnen wird.
Bei der Flüssigkeit kann es sich auch um heißen Dampf oder eine sonstige Art von Flüssigkeit handeln, die möglicherweise dem Käse einen zusätzlichen Geschmack verleiht.

### Vorteile der Erfindung

Ein wesentlicher Vorteil der Erfindung ist darin zu sehen, dass an sich auf einem bekannt basierenden Herstellungsverfahren von Halbhartkäse durch eine besondere Behandlung des Rohkäses eine neue Käsesorte entsteht, die bisher nicht gekannte Eigenschaften aufweist. Je nach Qualität des herzustellenden Käse kann für die Käsereimilch silofreie Rohmilch, pasteurisierte Milch oder ein Produkt aus Milchpulver, jeweils wunschweise in Bioqualität, verwendet werden.

Ein weiterer wesentlicher Vorteil der Erfindung ist, dass sich das erfindungsgemäße Verfahren an die Herstellung des Rohkäses anschließt. Ein Hersteller des erfindungsgemäßen Käse muss im Prinzip keine Kenntnisse über die Herstellung von Rohkäses besitzen, sondern kann "fertigen", vorzugsweise halbharten, Rohkäse erwerben und damit einen Käse mit der gewünschten Konsistenz herstellen. Je nach dem, in welchen Flüssigkeiten er die Erhitzung und die Abkühlung des Rohkäses vornimmt, kann er auch noch Einfluss auf den Geschmack des Endproduktes nehmen.

Wenn die Masse bereits zu Beginn des Herstellungsprozesses gewürzt und gesalzen wurde, kann nach Beendigung des Erhitzungsprozesse die Käsemasse verpackt werden und die Kühlung durch Überführung in die Kühlkette erfolgen. Andernfalls wird die Käsemasse in einer Lake gekühlt. Dies kann langsam erfolgen und damit eine starke Salzdurchdringung der Masse ermöglicht werden, oder schnell vorgenommen werden, was einen geringeren Salzgehalt zur Folge hat.

Diese Käsesorte lässt sich sowohl in kalter Form verspeisen, als auch vergleichbar mit einem Fleischstück oder einer Grillwurst auf einem Grill oder in einer Bratpfanne grillieren bzw. rösten, ohne dass ein Schmelzprozess des Käses, wie er an sich bekannt ist, eintritt. Daher ist auch der aus dem erfindungsgemäßen Verfahren gewonnene Käse für die Zubereitung von Rösti, Spätzle oder Spätzlepfannen geeignet. Der Käse kann diesen Speisen bereits zu Beginn der Zubereitung beigefügt sein und muss nicht erst am Ende zugefügt werden, was eine vorteilhafte Verwendung vor allem bei Fertiggerichten ermöglicht. Der erfindungsgemässe Käse lässt sich in unterschiedlichen Formen und Variationen herstellen und ist nicht an eine bestimmte Grösse oder an ein bestimmtes Volumen gebunden. Der Käse lässt sich so auch beispielsweise in Spaghetti-Form fertigen.

Ein weiterer wesentlicher Vorteil der Erfindung ist, dass basierend auf Rohmilch durch Hinzuführen von entsprechenden Kulturen in relativ kurzer Zeit ein, vorzugsweise 4 ½ bis 5 Stunden ein Käseprodukt entsteht, dass unmittelbar nach dem Würzen in einen Plastikbeutel vakuumiert eingebracht werden kann und unter klimatisierten Bedingungen kühl gehalten werden kann. Der Käse selbst ist dann unmittelbar nach dementsprechenden Kühlvorgang, der z. B. ca. 2 Stunden einnimmt, vollständig transportfähig.

Auf Grund des sehr kurzen Bearbeitungsprozesses ist das innovative Käseprodukt auch sehr kostengünstig herstellbar.

Dadurch ergibt sich auch die Möglichkeit, den Käse in sogenannte Tranchen vergleichbar mit einer Fleischscheibe zu schneiden und diese auf einem Grill zu grillen. Zudem ist es möglich, auch in einem zweiseitigen Grill den Käse z.B. auf einem Fleischstück zu grillieren ohne das der an sich übliche Käseverlauf eintritt.

Durch Zusätze von Produkten, wie Pilzen, Schnittlauch, Pfeffer oder dergleichen kann der Käse verfeinert werden. Es obliegt dem Fachmann, wann die entsprechenden Produkte während des Herstellungsverfahrens zugefügt werden können.

Eine weitere vorteilhafte Anwendung des Käses besteht darin, diesen zu frittieren. Entweder kann dieser in Form von Scheiben oder in Würfelchen frittiert werden. Zudem besteht die Möglichkeit, den Käse in Formen von Pommes Frites zu schneiden, so dass Frites herstellbar sind, die unmittelbar aus Käse bestehen.

Durch Hitzefällung der Molke wird sogenannter Ziegerkäse gewonnen, der wiederum in den Verarbeitungsprozess des Käses eingebracht werden kann.

Weitere Vorteilhafte Ausgestaltungen gehen aus der nachstehenden Beschreibung, sowie den Ansprüchen hervor.

### Beschreibung eines Ausführungsbeispiels

Der Prozess des Käseherstellens, wie er in der heutigen Käseindustrie betrieben wird, beginnt mit dem Bearbeiten der Milch, setzt sich mit dem Einlaben fort und endet mit dem Formen des Bruchs bzw. dessen Weiterbearbeitung. In diesen Phasen kann gesteuert werden, welche Eigenschaften hinsichtlich Geschmack und Konsistenz letztendlich der Käse haben soll.

Für einen Käse Schweizerischer Qualität wird Rohmilch verwendet, die den Käsereibetrieben zweimal täglich zugeliefert wird. Diese Milch wird, wenn sie gleich verarbeitet werden kann, d.h. bei Anlieferung am Morgen, auf etwa 12°C bis maximal 18°C gekühlt, im Falle der abendlichen Anlieferung wird die Milch für eine Zeit bis etwa 12 Stunden bei 8°C -12°C gelagert. Sollen Milchchargen aufgesammelt werde, kann die Rohmilch auch bis zu 36 Stunden bei 4°C-6°C aufbewahrt werden.
Die Milch wird einer Eingangsprüfung, der Reduktase, unterzogen, mit welcher die Haltbarkeit und Qualität festgestellt wird.
Die eigentliche Käseherstellung beginnt mit dem Zusatz von bestimmte Kulturen. Diese Säurewecker in Form von Mikroorganismen sorgen für die Reifung und die pH-Wert Absenkung. Die Enzyme der Milchsäurebakterien bauen den Milchzucker zu Milchsäure ab. Der Käsereimilch werden 1,5 bis 2,5 Promille mit einem Säuregrad von 30°SH bis 40°SH. In einem weiteren Schritt wird die aufbereitete Milch der Vorreifung überlassen, dies geschieht während der 5 bis 60 minütigen Vorreifzeit bei einer Temperatur von 30°C bis 32.5°C. Der Fettgehalt der Milch im Fertiger entspricht dem Fettgehalt der angelieferten Milch und beträgt etwa 3.2 %- 3.8 %.
Danach wird der Labstoff zugegeben. In dem vorliegenden Ausführungsbeispiel wird 3,3 ml- 3.9 ml Suparen auf 100 kg Milch verwendet. Zur Einlabung wird die Milch für eine Zeit von 30 bis 48 Minuten auf eine Temperatur von 30,5 °C bis 32,5 °C gebracht. Dann beginnt das Vorkäsen, das heißt, die Gallertmasse wird mit einer sogenannten Harfe gerührt und in Bruchstücke geschnitten, wobei die Molke austritt und mit einem normalen Rührer gerührt. Das Vorkäsen nimmt eine Zeit von 10 bis 35 Minuten in Anspruch.
Die gesamte Bruchmasse wird zusammen mit der Molke für 10 bis 20 Minuten bei einer Temperatur von 43 °C erwärmt, daraufhin die Molke abgepumpt und die restliche Masse für 20 bis 60 Minuten mit 500 - 2500kg gepresst.

In einem weiteren Bearbeitungsprozess wird der in den bisherigen Schritten hergestellte Rohkäse bei normaler Raumtemperatur in Fladen zerschnitten. Die zuvor gewonnene Molke wird auf eine Temperatur von 90°C-97°C erhitzt und die Fladen ca. 10-30 Minuten lang in die erhitzte Molke eingelegt. Nach dieser Zeit schwimmen die Fladen auf der Flüssigkeit.

Der Käse wird nun 1-5 Minuten in ein kaltes Wasserbad gebracht und dann in einer Salzlake der Stärke 18°Bé -23°Bé eingelegt. Dort verweilt er bei einer Temperatur von 8°C - 20°C für eine Zeit von 10 - 30 Minuten.

Der Käse wird dann in heißen Plastikfolien vakuumverpackt und bis zur Auslieferung bei einer Temperatur von kleiner als 5°C gelagert.

## Patentansprüche

1. Verfahren zur Herstellung eines Käses zum Grillen, Rösten oder der gleichen, mit den folgenden Verfahrensschritten:
a) Herstellung der Käsereimilch,
b) Hinzufügen von Gerinnungsmitteln,
c) Herbeiführung der Gerinnung und Herstellung einer Gallerte,
d) Schneiden der Gallerte in Bruchstücke,
e) Pressen der Bruchmasse und Abtrennung der Molke,
**gekennzeichnet durch** folgende Verfahrensschritte:
f) Einbringung des Rohkäses in eine mindestens 76°C Grad heiße Flüssigkeit;
g) Abkühlung der Bruchmasse.

2. Verfahren zur Herstellung eines Käses zum Grillen, Rösten oder der gleichen aus Rohkäse,
**gekennzeichnet durch** folgende Verfahrensschritte:
a) Einbringung des Rohkäses in eine mindestens 76°C Grad heiße Flüssigkeit;
b) Abkühlung des Rohkäses.

3. Verfahren nach einem der vorhergehenden Ansprüche, **dadurch gekennzeichnet, dass** die heiße Flüssigkeit mindestens 90°C Grad heiß ist.

4. Verfahren nach einem der vorhergehenden Ansprüche, **dadurch gekennzeichnet, dass** der Rohkäse für einen Zeitraum von 5-60 Minuten in der heißen Flüssigkeit verbleibt.

5. Verfahren nach einem der vorigen Ansprüche, **dadurch gekennzeichnet, dass** die heiße Flüssigkeit Molke ist.

6. Verfahren nach einem der vorhergehenden, **dadurch gekennzeichnet, dass** die Molke diejenige ist, die bei der Herstellung des Rohkäses gewonnen worden ist.

7. Verfahren nach einem der vorigen Ansprüche, **dadurch gekennzeichnet, dass** die Abkühlung in einer kühlenden Flüssigkeit mit einer Temperatur von 0°C -25 °C Grad erfolgt.

8. Verfahren nach einem der vorhergehenden Ansprüche, **dadurch gekennzeichnet, dass** die Kühlung über eine Dauer von 1 - 20 Minuten erfolgt.

9. Verfahren nach einem der vorhergehenden Ansprüche, **dadurch gekennzeichnet, dass** die Kühlung in einer Lake vorgenommen wird.

10. Verfahren nach einem der vorigen Ansprüche, **dadurch gekennzeichnet, dass** vor dem Einbringen des Rohkäses in die heiße Flüssigkeit das Bruchmolkegemisch in Formen eingeformt wird.

11. Verwendung des aus dem Herstellverfahren gemäss den vorherigen Ansprüchen gewonnenen Käses als Cheese Frites (Käsefritten).
